# FASCICULE DE BREVET EUROPEEN

(11) **EP 0 647 333 B1**
(45) Date de publication et mention de la délivrance du brevet: **04.02.1998**
(21) Numéro de dépôt: 93913194.2
(22) Date de dépôt: 25.06.1993
(51) Int. Cl.: G02F 1/1339

(54) **DISPOSITIF D'ENCAPSULATION ET DE PASSIVATION DE CIRCUIT POUR ECRANS PLATS**
VORRICHTUNG ZUR EINKAPSELUNG UND PASSIVIERUNG VON SCHALTKREISEN FÜR FLACHSCHIRME
CIRCUIT ENCAPSULATION AND PASSIVATION DEVICE FOR FLAT SCREENS

(30) Priorité: 26.06.1992 FR 9207887
(43) Date de publication de la demande: 12.04.1995
(73) Titulaire: THOMSON-LCD, 92800 Puteaux (FR)
(72) Inventeur: LEBRUN, Hugues Thomson-CSF SCPI, F-92402 Courbevoie Cédex (FR); MULATIER, Laurence Thomson-CSF SCPI, F-92402 Courbevoie Cédex (FR)
(74) Mandataire: Ruellan-Lemonnier, Brigitte
(86) Numéro de dépôt international: FR9300641
(87) Numéro de publication internationale: WO9400795

(56) Documents cités:
- EP-A- 0 025 250
- EP-A- 0 226 997
- EP-A- 0 402 170
- EP-A- 0 444 621
- FR-A- 2 530 056
- PATENT ABSTRACTS OF JAPAN vol. 7, no. 286 (P-244)(1431) 21 Décembre 1983 & JP,A,58 160 923 (SHARP) 24 September 1983

## Description

La présente invention a pour objet un dispositif d'encapsulation et de passivation de circuits et notamment de circuits de commande intégrés d'écrans plats.

Un écran plat à cristaux liquides est constitué d'un certain nombre de cellules-transducteurs électro-optiques constituées d'électrodes encadrant un cristal liquide dont les propriétés optiques sont modifiées en fonction de la valeur du champ qu'il subit et qui sont commandées par un dispositif de commutation. Chacune de ces cellules élémentaires ainsi constituée est appelée pixel.

L'adressage de ces pixels s'effectue par l'intermédiaire de lignes (lignes de sélection) et de colonnes (lignes de données) commandées par des circuits d'adressage périphériques (appelés drivers en langue anglaise).

Les électrodes, les dispositifs de commutation, les lignes et les colonnes sont déposés et gravés sur une même plaque substrat. Ils constituent la matrice active de l'écran. Avantageusement, les circuits de commande périphériques peuvent être eux aussi intégrés sur la plaque substrat comportant la matrice active. Il se pose alors le problème de leur passivation et de leur protection.

En effet, ces dispositifs sont fragiles et leur fiabilité passent par une protection efficace contre tous les types d'agression qui peuvent modifier leurs comportements électriques. Ces agressions peuvent être mécaniques du fait de chocs ou de rayures, chimiques quand, par exemple, l'écran est nettoyé avec un solvant organique ou un alcool, ou électriques lorsque, par exemple, une molécule polaire d'eau, d'alcool ou de cristal liquide va introduire dans le circuit une capacité parasite. La lumière est un autre type d'agression qui peut modifier le fonctionnement d'un circuit par photoconductivité.

D'une manière générale, la passivation des circuits intégrés est réalisée par une bicouche constituée de nitrure de silicium (SiN) isolant les couches actives et d'un métal ou d'un polymère organique opaque du type polyamide qui les protège de la lumière et, dans le cas des matrices actives des écrans plats, calibre la cavité dans laquelle se trouve le cristal liquide. Dans ce dernier cas, la plaque support comportant la matrice active et la contreplaque constituant la contre électrode sont collées l'une à l'autre par l'intermédiaire d'un cordon de scellement généralement en époxy qui permet aussi de maintenir le cristal liquide à l'intérieur des cellules. Ce type de dispositif est décrit en détail dans la demande de brevet EP O 444 621 de CASIO.

La présente invention permet d'optimiser la passivation et la protection de circuits électroniques réalisés sur un substrat. D'autre part, elle permet une utilisation judicieuse d'un cordon de scellement tel que décrit dans le brevet EP-A-0 444 621, et est particulièrement bien adaptée à celle des circuits d'adressage intégrés sur verre pour des écrans plats à matrices actives.

La présente invention concerne des circuits électroniques encapsulés et passivés réalisés sur une plaque substrat sur laquelle est aussi réalisée une matrice active commandant des cellules électro-optiques et comportant une couche opaque bloquant la conductivité des composants de la matrice active assurant la fonction d'espaceur et éventuellement celle de "black matrix", qui sont caractérisés en ce que cette couche est disposée de manière à encapsuler et à passiver lesdits circuits électroniques.

Selon une autre caractéristique, ce dispositif comporte un cordon de scellement déposé autour du circuit assurant l'encapsulation, la couche opaque étant déposée sur les circuits et les recouvrant totalement.

Ce type d'encapsulation et de passivation permet de minimiser la surface perdue à la périphérie de la partie active de l'écran sans pour cela compliquer le processus de fabrication.

La présente invention sera mieux comprise et des avantages supplémentaires vont apparaître dans la description qui va suivre illustrée par les figures suivantes :
- la figure 1 représente une vue en coupe d'un écran à cristaux liquides suivant un premier exemple,
- la figure 2 représente une vue en coupe d'un écran à cristaux liquides selon un second exemple,
- la figure 3 représente une vue planaire d'un écran à cristaux liquides muni d'un dispositif particulier du second exemple,
- la figure 4 représente une vue en coupe d'un écran à cristaux liquides selon un mode de réalisation de l'invention, et
- la figure 5 représente une vue planaire d'un écran à cristaux liquides muni d'un dispositif particulier selon le mode de réalisation de l'invention.

Dans un premier temps, la plaque substrat non encore traitée est passivée d'une manière classique, comme par exemple avec une couche de nitrure de silicium. Cette plaque est en matériau transparent (comme par exemple du verre, du quartz ou du plexiglass) dans le cas d'un mode transmissible de lumière (comme pour les écrans projection) mais peut bien évidemment être d'un tout autre matériau dans le cadre d'un mode réflexif.

Dans le type d'écran qui nous intéresse, les circuits d'adressage périphériques (drivers) sont réalisés en même temps et avec les mêmes matériaux que la matrice active. De tels types d'écrans sont décrits dans la demande de brevet française N°87 03737 de Hosiden Electronics ou encore dans le brevet français N° 87 07941 de THOMSON-CSF.

Le cordon de scellement peut être opaque ou transparent.

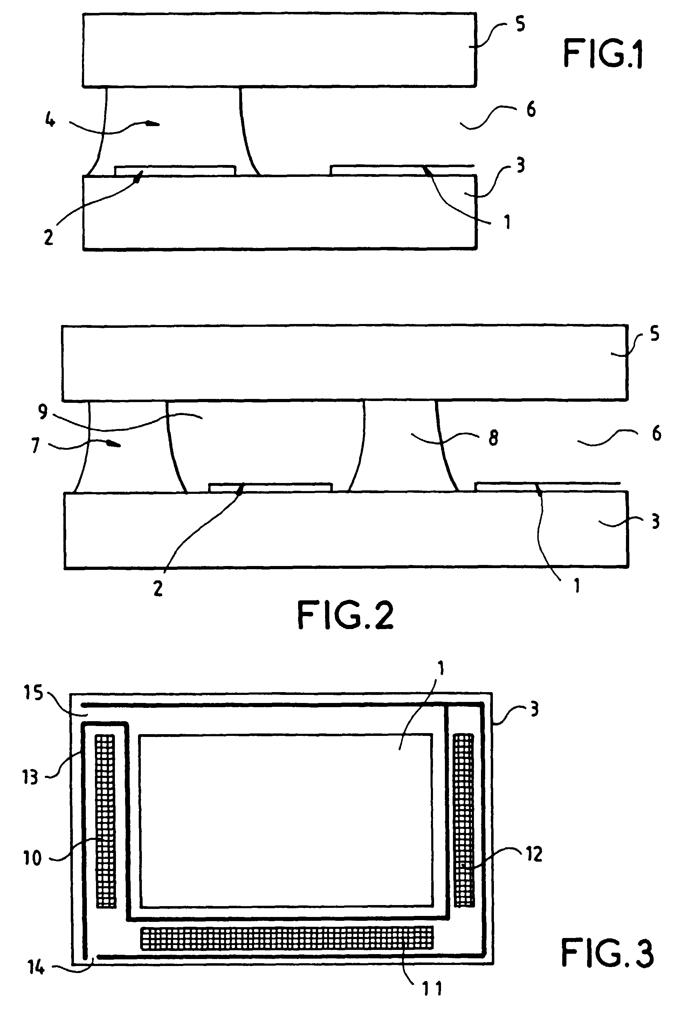

Dans les figures 1, 2, 3, 4 et 5 les éléments identiques ont la même indexation.

Sur la figure 1, la matrice active 1 et le circuit d'adressage intégré 2 ont été déposés et gravés sur la plaque 3. Habituellement, le cordon de scellement de l'écran est disposé entre la matrice active 1 et le circuit d'adressage 2 afin de maintenir un écartement calibré entre les plaques 3 et 5 en délimitant une zone contenant le cristal liquide. Dans cet exemple toutefois, le cordon 4 recouvre totalement le circuit d'adressage 2 et délimite une zone 6 contenant le cristal liquide. Ce cordon constitue donc pour ces circuits, en plus d'un écarteur, d'une couche de passivation contre les agressions mécaniques, chimiques et électriques, et leurs comportements électriques sont ainsi parfaitement préservés.

Par ailleurs, dans cet exemple la place perdue en périphérie de la partie utile de l'écran est minimisée puisque l'électronique d adressage, habituellement à l'extérieur du cordon, se retrouve sous le cordon et ne requiert donc pas de place supplémentaire.

Ce cordon de scellement peut être obtenu en utilisant de l'époxy polymérisé à chaud ou de l'époxy polymérisé sous ultra-violet (matériaux acryliques, colles). Dans tous les cas lors du dépôt du cordon, une ouverture que l'on rebouche à la fin du process est ménagée afin de libérer le gaz emprisonné dans l'enceinte et permet de remplir cette enceinte de cristal liquide dans le cas d'un écran à cristal liquide. La nature de ce gaz (air, azote, argon ou tout type de gaz inerte) dépend de l'atmosphère dans lequel l'opération est réalisée. On peut utiliser pour la réalisation de ce cordon un matériau opaque afin de bloquer la photoconductivité des drivers.

Un deuxième exemple utilisant les mêmes matériaux pour le cordon de scellement est présenté sur la figure 2. Sur cette figure, le cordon de scellement des plaques 3 et 5 est déposé de part et d'autre (éléments 7 et 8) du circuit d'adressage 2 de manière à obtenir une enceinte 9 parfaitement étanche. Dans ce cas, le cordon de scellement ne doit jamais effleurer les circuits intégrés sous peine de modifier localement leurs caractéristiques, c'est-à-dire que les propriétés électriques des matériaux utilisés dans les circuits intégrés ne seront pas équivalents dans les zones recouvertes ou effleurées par le cordon de scellement et les zones non recouvertes ; il en résulterait un dysfonctionnement des fonctions des circuits.

De la même manière que dans le premier exemple une ouverture est ménagée dans le cordon de scellement afin de libérer le gaz emprisonné dans l'enceinte. A la fin de l'opération d'encapsulation, l'enceinte 9 contenant le driver est alors parfaitement étanche.

La figure 3 représente une vue planaire d'un écran plat comportant une structure de cordon de scellement selon le second exemple de la figure 2. Sur une plaque 3, on réalise la matrice active 1 et les drivers intégrés 10, 11 et 12. Le cordon de scellement 13 du type de ceux évoqués plus haut est déposé autour du driver en laissant une ouverture 14 permettant au gaz de s'échapper de l'enceinte ainsi délimitée. Dans ce cas particulier, l'écran comporte trois drivers intégrés 10, 11 et 12 sur trois côtés, et, sur le quatrième côté le cordon remplit sa fonction classique qui est d'emprisonner entre les deux plaques le cristal liquide tout en laissant une ouverture 15 pour les mêmes raisons que celles évoquées plus haut (remplissage du cristal liquide).

La protection et la passivation des circuits d'adressage lignes et colonnes intégrés d'un écran peut être réalisée à la fois avec le cordon sur les drivers et avec le cordon autour des drivers. C'est-à-dire que l'on peut, par exemple, passiver les diverses lignes d'un écran avec le premier mode de réalisation et les diverses colonnes de ce même écran avec le second ou inversement.

Afin de maintenir un espace parfaitement identique entre les plaques au niveau du cordon sur toute la surface de l'écran, des espaceurs peuvent être introduits dans la zone du cordon. Ces espaceurs sont des billes de diamètre calibré qui sont incorporées dans le cordon avant son dépôt, ou un empilement de couches d'une épaisseur calibrée réalisées en même temps que la matrice active au cour du procédé d'assemblage de l'écran.

Il peut arriver alors que le dépôt du cordon directement sur les drivers crée des problèmes d'adhérence ou détériore les drivers. Le mode suivant de réalisation de l'invention permet alors d'éviter ce type de problème.

En effet, parallèlement à ce type de cordon à espaceur, sont utllisées sur les composants et les connexions de la matrice active, des couches de LBL (pour Light Blocking Layer en langue anglaise) qui joue le rôle de masque optique en bloquant la photoconductivité de la matrice active, d'espaceur pour la cellule à cristaux liquides et éventuellement de masque noir (Black Matrix en langue anglaise) afin d'améliorer le contraste de l'écran.

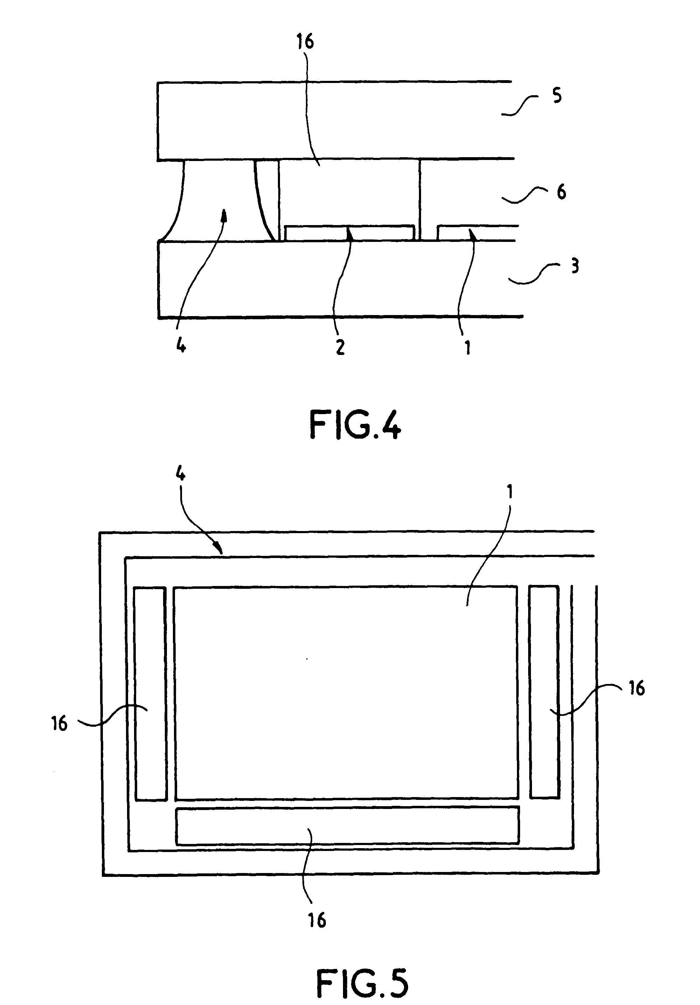

Le mode de réalisation de l'invention représenté sur les figures 4 et 5 consiste alors à utiliser ces couches LBL 16 pour, en plus des fonctions précédentes, passiver et protéger les drivers intégrés 2, le cordon de scellement 4 étant alors situé sur l'extérieur de la matrice active 1 et des drivers périphériques intégrés 2 passivés et protégés par les couches de LBL 16. Le LBL étant utilisé pour la fabrication des cellules à cristaux liquides, le dépôt de celle-ci sur les drivers intégrés fait partie du même processus de fabrication et est donc très simple et peu coûteux de mise en oeuvre.

D'autre part, l'adhérence du cordon 4 à la plaque 3 est meilleure puisque celui-ci n'est plus déposé sur des couches métalliques, isolantes ou semi-conductrices mais sur la plaque support 3 elle-même (généralement en verre) à une distance requise (de l'ordre du mm ou moins) du LBL 16 déposé sur les drivers périphériques intégrés 2 et la matrice active 1.

Bien évidemment, ce mode de réalisation ne se limite pas aux écrans comportant des cordons à espaceurs mais à tous les types de cordons et de LBL.

Sur la figure 5 est représenté un écran particulier puisqu'il comporte trois drivers intégrés à la périphérie de la matrice active 1 passivés et protégés par des couches de LBL 16.

Cette invention s'applique aussi aux écrans n'ayant qu'un seul type (ligne ou colonne) de circuit d'adressage intégré.

D'autre part, le matériau semiconducteur utilisé pour la réalisation de la matrice active et des circuits d'adressage intégrés peut être du Silicium amorphe ou polycristallin ou du Sélénlure de Cadmium(Cdse), Le composant de base peut être un transistor ou une diode.

La présente invention s'applique à tous les types d'écrans plats à circuits d'adressage intégrés comme les écrans à cristaux liquides utilisant la biréfringence contrôlée électriquement, le mode nématique en hélice ou le mode ferroélectrique, ou encore les écrans à plasma.

## Revendications

1. Circuits électroniques (2, 10, 11, 12) encapsulés et passivés réalisés sur une plaque substrat (3) sur laquelle est aussi réalisée une matrice active (1) commandant des cellules électro-optiques et comportant une couche opaque (16) bloquant la conductivité des composants de la matrice active (1) assurant la fonction d'espaceur et éventuellement celle de "black matrix", caractérisés en ce que cette couche (16) est disposée de manière à encapsuler et à passiver lesdits circuits électroniques (2, 10, 11, 12).

2. Circuits électroniques selon la revendication 1, caractérisés en ce que la couche (16) d'encapsulation et de passivation est déposée sur les circuits (2, 10, 11, 12) et les recouvre totalement.

3. Circuits électroniques selon l'une quelconque des revendications 1 et 2, caractérisés en ce que la plaque substrat (3) comporte un cordon de scellement (7, 8) déposé autour du circuit (2) assurant l'encapsulation.

4. Circuits électroniques selon la revendication 3, caractérisés en ce que le cordon de scellement (7, 8) est déposé de part et d'autre du circuit (2) de manière à former une enceinte étanche.

5. Circuits électroniques selon l'une quelconque des revendications précédentes, caractérisés en ce que le circuit électronique (2, 10, 11, 12) est un circuit d'adressage intégré de matrice active (1) d'un écran à cristaux liquides ou à plasma.

6. Circuits électroniques selon l'une quelconque des revendications précédentes, caractérisés en ce que la plaque substrat (3) sur laquelle sont réalisés les circuits électroniques (2, 10, 11, 12) est un matériau transparent.

7. Circuits électroniques selon l'une quelconque des revendications précédentes, caractérisés en ce que le composant de base utilisé dans le ou les circuits électroniques (2, 10, 11, 12) est un transistor ou une diode.

8. Circuits électroniques selon l'une quelconque des revendications précédentes, caractérisés en ce que le matériau semi-conducteur utilisé dans le ou les circuits électroniques (2, 10, 11, 12) est du silicium amorphe ou polycristallin ou du séléniure de cadmium.

## Claims

1. Encapsulated and passivated electronic circuits (2, 10, 11, 12) produced on a substrate plate (3) on which an active matrix (1) controlling electro-optical cells is also produced, and containing an opaque layer (16) which suppresses the conductivity of the components of the active matrix (1) and which acts as a spacer and if necessary also as a "black matrix", characterised in that this layer (16) is arranged is such as way as to encapsulate and passivate said electronic circuits (2, 10, 11, 12).

2. Electronic circuits according to Claim 1, characterised in that the encapsulating and passivating layer (16) is deposited onto the circuits (2, 10, 11, 12) and completely covers them.

3. Electronic circuits according to any one of Claims 1 and 2, characterised in that the substrate plate (3) contains a sealing bead (7, 8) deposited around the circuit (2) and provides encapsulation.

4. Electronic circuits according to Claim 3, characterised in that the sealing bead (7, 8) is deposited either side of the circuit (2) so as to form a sealed enclosure.

5. Electronic circuits according to any one of the preceding Claims, characterised in that the electronic circuit (2, 10, 11, 12) is an integrated driver circuit for the active matrix (1) of a liquid crystal or plasma display.

6. Electronic circuits according to any one of the preceding Claims, characterised in that the substrate plate (3) on which the electronic circuits (2, 10, 11, 12) are produced is a transparent material.

7. Electronic circuits according any one of the preceding Claims, characterised in that the basic component used in the electronic circuit or circuits (2, 10, 11, 12) is a transistor or a diode.

8. Electronic circuits according any one of the preceding Claims, characterised in that the semiconductor material used in the electronic circuit or circuits (2, 10, 11, 12) is amorphous or polycrystalline silicon or cadmium selenide.

## Patentansprüche

1. Eingekapselte und passivierte elektronische Schaltkreise (2, 10, 11, 12), die auf einer Substratplatte (3) ausgebildet sind, auf der auch eine aktive Matrix (1) ausgebildet ist, die elektro-optische Zellen steuert und eine undurchsichtige Schicht (16) trägt, die die Leitfähigkeit der Komponenten der aktiven Matrix (1) verhindet und die Funktion eines Abstandshalters und gegebenenfalls die einer "black matrix" ausübt,
dadurch gekennzeichnet, daß die Schicht (16) derart ausgebildet ist, daß sie die elektronischen Schaltkreise (2, 10, 11, 12) einkapselt und passiviert.

2. Elektronische Schaltkreise nach Anspruch 1,
dadurch gekennzeichnet, daß die Schicht (16) für die Einkapselung und die Passivierung auf den Schaltkreisen (2, 10, 11, 12) liegt und diese vollständig bedeckt.

3. Elektronische Schaltkreise nach einem der Ansprüche 1 und 2,
dadurch gekennzeichnet, daß die Substratplatte (3) ein Einkapselungsband (7, 8) trägt, das den Schaltkreis (2) umgibt und die Einkapselung sicherstellt.

4. Elektronische Schaltkreise nach Anspruch 3,
dadurch gekennzeichnet, daß das Einkapselungsband (7, 8) derart zu beiden Seiten des Schaltkreises (2) liegt, daß es einen abgedichteten Hohlraum bildet.

5. Elektronische Schaltkreise nach einem der vorangehenden Ansprüche,
dadurch gekennzeichnet, daß der elektronische Schaltkreis (2, 10, 11, 12) ein Adressierschaltkreis ist, der einen Bestandteil der aktiven Matrix (1) eines Flüssigkristall- oder Plasma-Bildschirms bildet.

6. Elektronische Schaltkreise nach einem der vorangehenden Ansprüche,
dadurch gekennzeichnet, daß die Substratplatte (3), auf der die elektronischen Schaltkreise (2, 10, 11, 12) ausgebildet sind, aus einem transparenten Material besteht.

7. Elektronische Schaltkreise nach einem der vorangehenden Ansprüche,
dadurch gekennzeichnet, daß die in dem elektronischen Schaltkreis oder den elektronischen Schaltkreisen (2, 10, 11, 12) verwendete Grundkomponente ein Transistor oder eine Diode ist.

8. Elektronische Schaltkreise nach einem der vorangehenden Ansprüche,
dadurch gekennzeichnet, daß das in dem elektronischen Schaltkreis oder den elektronischen Schaltkreisen (2, 10, 11, 12) verwendete Material amorphes Silizium oder Polykristallin oder Cadmium-Selenid ist.
